# EUROPEAN PATENT SPECIFICATION

(11) **EP 0 321 415 B1**
(45) Date of publication and mention of the grant of the patent: **27.01.1993**
(21) Application number: 88830462.3
(22) Date of filing: 28.10.1988
(51) Int. Cl.: A61L 2/18, A61C 19/00

(54) **A device for collection and disposal of the soiled liquids ejected from dental surgery instruments during or following sterilization, and forholding the instruments during such operations**
Einrichtung zum Auffangen und zur Abfuhr von während der Sterilisation aus zahnärztlichen Instrumenten ausfliessenden verunreinigten Flüssigkeiten und zur Haltung der Instrumente während solcher Operationen
Dispositif pour le recueil et l'évacuation de liquides souillés qui s'écoulent des instruments de chirurgie dentaire pendant ou après la stérilisation, et pour la rétention de ces instruments pendant de telles opérations

(30) Priority: 18.11.1987 IT 500287 U; 06.07.1988 IT 488088 U
(43) Date of publication of application: 21.06.1989
(73) Proprietor: CASTELLINI S.p.A., I-40013 Castelmaggiore (Bologna) (IT)
(72) Inventor: Castellini, Franco, I-40135 Bologna (IT)
(74) Representative: Lanzoni, Luciano

(56) References cited:
- DE-C- 3 611 327

## Description

A device for collection and disposal of the soiled liquids ejected from dental surgery instruments during or following sterilization, and for holding the instruments during such operations.

The invention relates to a device for collection and disposal of the soiled liquids ejected from dental surgery instruments during or following sterilization of their internal passages, and for holding the instruments during such operations. The prior art embraces apparatus for sterilizing the air and/or water supply passages incorporated into the handgrips of certain dental surgery instruments such as high speed drills and scale removers; fluids supplied through these passages serve as propellant for the instrument, and/or as coolant for the instrument or for the area of the patient's mouth subjected to treatment.

Apparatus of the type in question is disclosed in DE-OS 3 246 266. At a convenient moment when not in use, the instruments are placed in the apparatus, and their internal passages filled to capacity with a sterilizing liquid. The sterilizer is left to act for a given duration before being ejected forcibly from the passages, generally by flushing out with water; in fact, these instruments form part of a column-mounted assembly of equipment to be found in any modern dental surgery, which incorporates a pressurized supply of water for their operation. Turning on the supply, accordingly, the internal passages of the instruments are flushed clear of the soiled sterilizer and rinsed, filling up with clean water in the process. Thus, with the rinse completed, the passages remain primed with water in readiness for subsequent use.

When carrying out the two operations of sterilizing and flushing the passages, splashing and dripping are prevented by placing the instruments initially in a special container that serves ultimately to collect the sterilizer, and with it, the substances removed from the passages.

Care also needs to be taken to ensure that the sterilizer, an acid and chemically aggressive fluid in most cases, will not overflow from the container and stain, if not actually damage the surface on which the container stands; accordingly, the volume of the container will be such, preferably, as to accommodate the entire quantity of sterilizer and flushing liquid utilized, and provision must be made to ensure that the instrument grips will not fall and become dirtied, and/or cause the surface on which the container stands to be subjected to chemical attack.

German patent DE PS-36 11 327 disclosed apparatus in which to place the handgrips of dental surgery instruments and collect the soiled sterilizing liquid aforementioned, structured in such a way that it can be positioned over the spittle bowl of the column equipment and discharge its contents thereinto from an annular chamber, or trap, that forms part of the container.

The type of structure in question thus permits of ensuring a continuous discharge of any sterilizer happening to overflow from the trap to the spittle bowl; however, whilst it is evident that overflow problems are eliminated by such an arrangement, absolute hygiene cannot be guaranteed, given that the spittle bowl is a ready source of germs.

An additional drawback of the trap-type embodiment of the container is that the instruments and their handgrips are held permanently in an environment (the annular chamber) that is also occupied by the soiled sterilizer, and inevitably, by the germs entrained in it.

Another problem arising with this patent apparatus is that of the difficulty experienced with cleaning operations; the annular chamber has to be upturned in order to empty it entirely of its contents, and this is a contingency that necessarily influences the mobility and positioning of the container. The annular chamber serves additionally to enable part immersion, in the soiled sterilizing fluid, of the terminal section of the instrument and of the end of the suction tube connected to the column vacuum pump. However, as the suction capacity of this tube is distinctly greater than the capacities of the various instruments and handgrips put together, the need also exists for a replenishing system to keep the annular chamber topped up with liquid, ensuring that it will not empty out and cause the suction tube to draw in air only; with the container placed above the spittle bowl, in fact, the empty chamber will be in direct communication with the outlet of the bowl. Furthermore, by means of such DE-PS 36 11 327 apparatus, the spitton cup of the dentist assembly is completely filled, being so the dentist assembly not utilizable during the sterilizing operation.

Accordingly, the object of the present invention is to overcome the drawbacks described above and in particular is to provide a device that will allow continued use of the entire equipment column even with sterilization and/or disinfection of instruments in progress.

The stated object is achieved with a collection and disposal device as characterized in the appended claims.

A first advantage of the invention is essentially one of efficiency and safety gained by virtue of the fact that of the various outlets affored by the column, the outlet of the drinking glass well is without doubt the least prone to contamination. Another advantage of the invention is that of the level of hygiene obtainable, given that sterilizer flushed from the instrument is discharged from the device continuously and directly, without being allowed to accumulate.

The invention will now be described in detail, by way of example, with the aid of the accompanying drawings, in which:
fig 1 shows a perspective of the device disclosed, seen fitted to a dental surgery equipment column and holding an instrument for sterilization;
fig 2 illustrates the device of fig 1 substantially in section, viewed in a plane II-II that coincides with its transverse axis;
fig 3 shows a plan of the device of figs 1 and 2, in which no instruments are shown;
figs 4 and 5 illustrate an alternative embodiment of the device, seen in substantially the same views as figs 1 and 2, respectively.

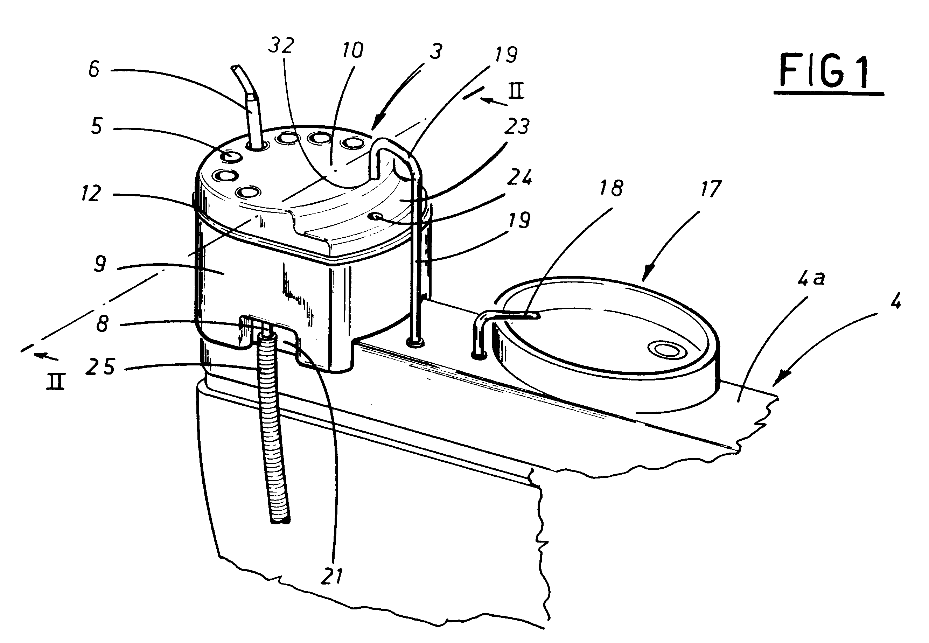

Observing fig 1, the collection and disposal device disclosed, denoted 3 in its entirety, will be seen to rest on a support 4a afforded by the equipment column 4 with which the surgery instruments 6 for sterilization are associated.

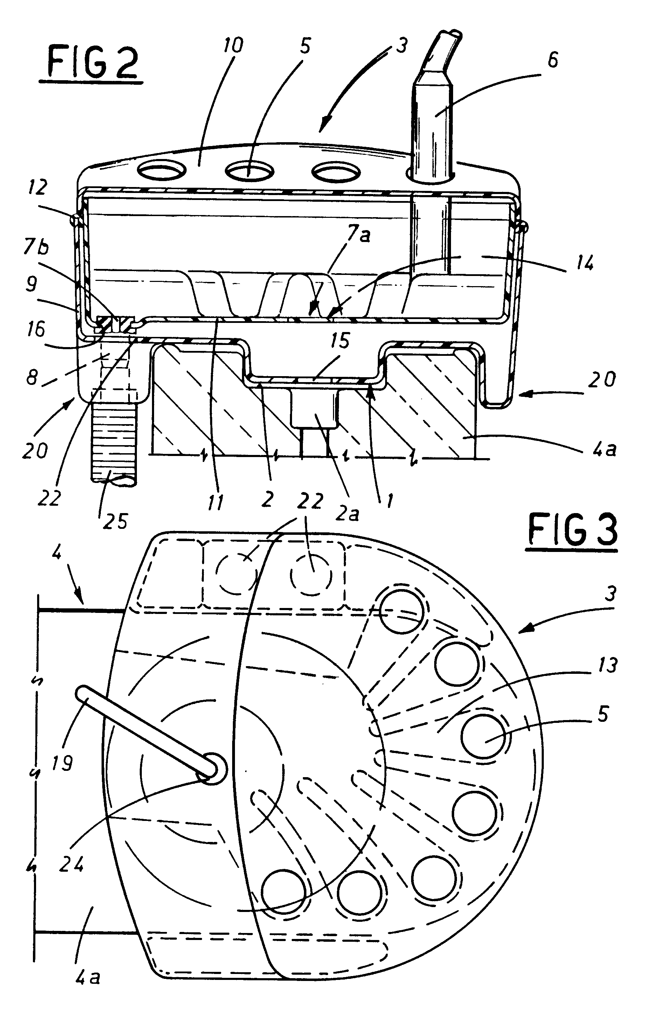

The support 4a forms a part of that section of the column 4 flanking the chair occupied by the patient and incorporating, amongst other items, a spittle bowl 17, a nozzle 18 from which water is dispensed into the bowl for cleansing purposes, and a sunken holder, or well 2 (fig 2) that serves as a stand for a drinking glass (not shown in fig 1) holding water for the patient's oral rinse. 19 denotes an arched water tap projecting from the support 4a, the overhanging spout 32 of which is directed down into the well 2 so as to permit of refilling the drinking glass. The bottom of the well 2 affords an outlet hole 2a, connecting with the main waste outlet of the column 4, that serves to drain off any water dripping from the tap 19 or overflowing from the drinking glass.

The device 3 according to the invention exhibits a projection 1 at bottom, designed to insert into the well 2 afforded by the support 4a (see fig 2), and is embodied substantially as a container provided uppermost with a plurality of sockets 5 in which to position the instruments 6 for sterilization, and with a bottom outlet 7 (fig 2) from which liquids are discharged directly, that is to say, without first accumulating in the container.

The container 3 consists of three distinct parts:-
a hollow bottom section 9, a hollow top section 10, and a middle section 11, the top section and bottom section being disposed with their hollow insides facing one another.

Viewed in plan, the container 3 exhibits a shape that is subsequently symmetrical in relation to a single axis coinciding with that of the support 4a; accordingly, there is only one manner in which the three sections 9, 10 and 11 can be assembled.

The projection 1 is incorporated into the bottom section 9 substantially at centre, and flanked on either side by further bottom projections 20 that embrace the support 4a to ensure that the device 3 is invested with greater stability, particularly when instruments 6 for sterilization are placed in the respective sockets 5.

15 denotes a hole formed in the projection 1 of the bottom section 9, which is located in alignment with the outlet 2a of the drinking glass well 2 in the support 4a.

21 denotes a recess formed in one of the two side projections 20 of the bottom section 9 (see fig 1), the uppermost surface of which affords one or two openings 22 (fig 2) serving to accept the relative couplers 8 of suction tubes 25 connected to the vacuum pump of the column equipment, in the event that one of these openings is used in place of the outlet hole 15 aforementioned.

The top section 10 of the container will be seen to afford a plurality of holes that combine with the middle section 11, in a manner that will shortly become clear, to create the sockets 5 in which the instruments 6 for sterilization are accommodated. The top section 10 also incorporates a slightly lowered profile 23, adjacent to the water tap 19, affording a hole 24 located in vertical alignment with the spout 32 of the tap 19 (see figs 1 and 3); thus, in the event of the tap dripping, water will be prevented from trickling over the container 3 and down onto the support 4a, or to the floor.

The middle section 11 of the container is embodied substantially as a basin that fits into the bottom section 9 and is covered by the top section 10; the base of the middle section also serves as a depth stop to check the descent of the instruments 6.

12 denotes means located between the top and middle sections 9 and 11 that serve to ensure a tight seal and, at the same time, to stabilize the fit between the two sections; such means exhibit an essentially C-shaped profile that envelops the top lip of the bottom section 9, providing a surface on which the top section 10 can rest in fluid-tight contact.

The direct discharge outlet 7 referred to above is located in the base of the middle section 11, and may be located substantially in a central position, as denoted by 7a in fig 2, or alternatively, made to coincide with the bore 7b of a quick coupler or other fitting 8 inserted through and clamped to a hole 16 located at one side of the base; in this instance, the hole 16 will be aligned vertically with the opening 22 in the recess 21 in such a way that the coupler 8 can project downwards and be connected up without difficulty to the end of the suction tube 25.

To advantage, the base of the middle section 11 might be embodied solid with a removable piece, or knock-out 14, marked in a substantially central position, so as to permit of utilizing the suction line outlet 7b without opening up additional holes; alternatively, the fitting 8 at the side outlet could be blocked, and the central outlet 7a then opened up simply by applying pressure to the knock-out 14 and removing it from the base, in order to utilize the outlet 15 in the centre of the bottom section 9.

The base of the middle section 11 will also exhibit a plurality of channels 13 (see fig 3) disposed in a substantially radial pattern, each terminating at a respective peripheral point directly beneath a corresponding socket 5 in the top section 10.

The channels 13 converge on the outlet 7a (or the knock-out 14), and are of depth such as to ensure that liquid ejected from one instrument 6 will not splash onto and pollute the instruments 6 occupying the adjacent sockets.

Finally, the base of the middle section 11 will slope gently toward the central and side outlets 7 and 16 (fig 2) in order to ensure that the soiled liquids drain off freely.

Operation of the device 3 will now be described, assuming that disposal of the soiled sterilizing and flushing liquids ejected from the instruments 6 is effected by way of the coupler 8.

Having selected the moment to effect sterilization, the device 3 is set on the support 4a, care being taken to locate the bottom projection 1 faultlessly in the well 2 and line up the hole 24 of the top section 10 beneath the outlet 32 of the tap 19.

This accomplished, and the suction tube or tubes 25 connected to the coupler/s 8, the instruments 6 are placed in their relative sockets 5 and sterilzation can commence. The vacuum pump is also switched on, and accordingly, the soiled sterilizer ejected from the instruments 6 will fall into the channels 13 and run away toward the outlet 7b, thanks to the gentle gradient, thereafter discharging along the length of the tube 25 to join the main waste outlet of the equipment column. Sterilization completed, the same process is repeated with rinsing water.

Should the user prefer not to utilize the suction tube 25 as an outlet, the coupler 8 can be blocked and the central outlet 7a utilized, in which case the soiled sterilizer and the flushing liquid will discharge into the drinking glass well 2 and out via the main column outlet entirely unobstructed.

Cleaning of the device is abundantly simple; with sterilization accomplished, in fact, the inside of the container will exhibit no more than a slight dampness left by the rinsing liquid, the soiled sterilizer having been flushed from all internal surfaces, including those of the channels 13.

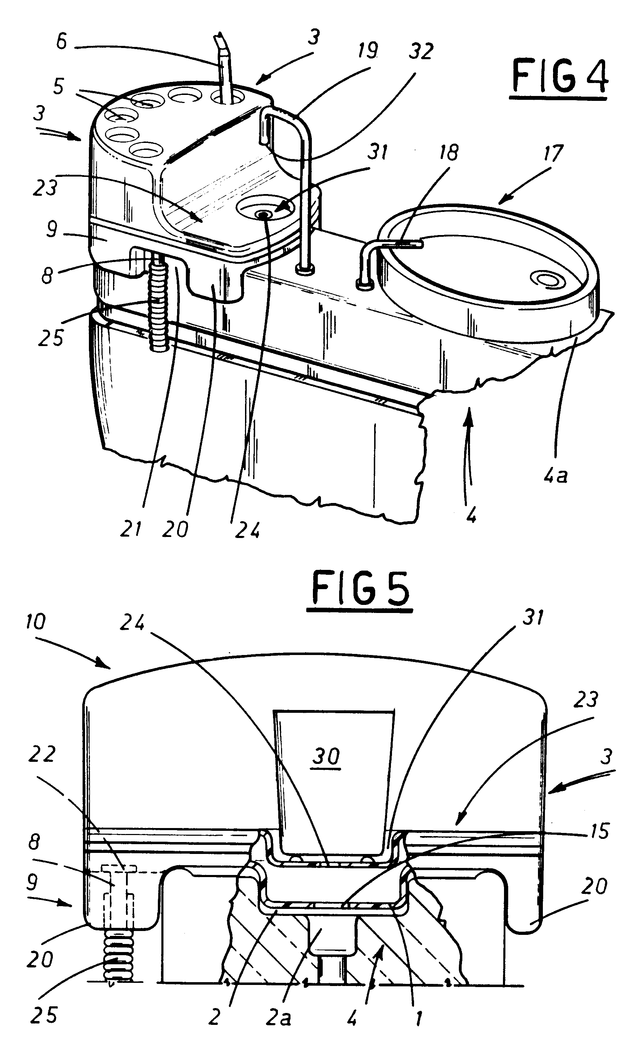

In an alternative embodiment illustrated in figs 4 and 5, the lowered profile 23 is more pronounced, compared to that of the embodiment illustrated in fig 1, and incorporates a well 31 for a drinking glass 30. The drip hole 24 will be located in the well 31 in this instance, vertically aligned with the spout 32 of the water tap 19 (see fig 4), and preferably, with the bottom outlet hole 15 also.

Furthermore, the profile 23 is lowered sufficiently to permit of accommodating the drinking glass 30 beneath the spout of the water tap 19 even when the device 3 is positioned with its bottom projection 1 inserted in the well 2 of the column support 4a and operational.

With this type of embodiment, it becomes possible to leave the device permanently in position on the support 4a in readiness for further sterilizating and/or disinfecting operations, and at the same time to retain the use of the drinking glass 30 for oral rinsing purposes, though utilizing the well 31 afforded by the container in place of the permanent well 2 in the column support 4a.

The foregoing specification implies no limitation of scope; for example the walls of the sockets 5 accommodating the instruments 6 might extend down toward the middle section 11 in a taper, rather than with the straight profile illustrated.

## Claims

1. A device for collection and disposal of soiled liquids ejected from dental surgery instruments in sterilization procedures and for holding the instruments during such operations, equipment (4) comprising a support (4a) provided by a well (2), equipped by a relative outlet (2a), for containing an oral rinse drinking glass (30) and a water tap (19) provided by a spout (32) from which the drinking glass (30) is filled, device of the type embodied as a container provided by a plurality of sockets (5) in which to place the instruments (6) requiring steriliztion, located uppermost and comunicating with at least one bottom outlet (7) through which sterilizing liquid ejected from the instruments (6) is discharged directly, without accumulating in the container, **characterized by the fact** that it comprises:
- a bottom projection (1) matched with and insertable in said well (2) and by the fact that
- the uppermost part of such a container, substantially above the projection (1) at bottom, is embodied with a lowered profile (23) affording a drinking glass well (31), positioned in vertical alignment with said spout (32), and an outlet hole (24) located in said well (31).

2. A device as in claim 1, **characterized by the fact** that direct discharge occurs through an outlet (7b) positioned to one side of the container and coinciding with a quick coupler (8) for attachment of a tube (25) connected with means for generating suction that constitute a part of the surgery equipment (4).

3. A device as in claim 1, **comprising** a hollow bottom section (9) that incorporates the projection (1), a hollow top section (10) that incorporates the sockets (5) for accomodation of the instruments (6) to be sterilized, and a middle section (11) that is embodied substantially as a basin and functions as a stop serving to establish the depth to which the instruments (6) can be inserted, **characterized by the fact** that the bottom section (9) and the top section (10) are disposed with their hollow insides facing one another, the middle section (11) is fitted into the bottom section (9) and the top section (10) is fitted over the middle section (11); sealing means (12) being located between the top, middle and bottom sections (9, 10, 11) to ensure a stable fit between the middle section (11) and the bottom section (9).

4. A device as in claim 3, **characterized by the fact** that the base of the middle section (11) is embodied with a plurality of essentially radial channels (13), each terminating at a point coinciding with a respective socket (5) in the hollow top section (10), that serves to carry away liquid ejected from the instruments (6).

5. A device as in claim 1, **characterized by the fact** that the outlet hole (24) in the drinking glass well (31) is aligned with the relative outlet (2a).

6. A device as in claim 1, **characterized by the fact** that the outlet hole (24) in the drinking glass well (31) is located in vertical alignment with the spout (32) of the water tap (19).

7. A device as in claim 1, **characterized by the fact** that the lowered profile (23) occupies substantially the entire area of the uppermost part of the container not occupied by the socket (5).

8. A device as in claim 3, **characterized by the fact** that the middle section (11) exhibits a hole (16), located to one side, serving to accomodate a quick coupler (8) for connection to suction means constituting part of the surgery equipment (4), and vertically aligned with a corresponding opening (22) in the hollow bottom section (9) by which passage is afforded to the coupler (8).

9. A device as in claim 3, **characterized by the fact** that the hollow bottom section (9) exhibits two further projections (20) located one on either side of the bottom projection (1) and serving to embrace the support (4a) of the surgery equipment (4) that affords the well (2) for accomodation of a drinking glass (30).

## Patentansprüche

1. Vorrichtung zum Sammeln und Ablassen verschmutzender, von zahnärztlichen Instrumenten während deren Sterilisierung ausgestossener Flüssigkeiten und zum Beinhalten der Instrumente während dieser Vorgänge, Apparat (4), enthaltend einen Support (4a), der mit einem, einen entsprechenden Ablass (2a) aufweisenden Sitz (2) zur Aufnahme eines Bechers (30) zur Mundspülung versehen ist sowie mit einem Wasserhahn (19), versehen mit einem Auslass (32), durch den der Spülbecher (30) gefüllt wird, eine Vorrichtung von einem als Behälter ausgelegten Typ, ausgestattet mit einer Anzahl von Sitzen (5), in welche die zu sterilisierenden Instrumente (6) gesteckt werden, die oben angeordnet und mit wenigstens einer Bodenöffnung (7) versehen ist, durch welche die von den Instrumenten (6) ausgestossene Sterilisierflüssigkeit direkt abgelassen wird, ohne sich in dem Behälter zu sammeln, **dadurch gekennzeichnet,** dass sie wie folgt enthält:
- einen Bodenansatz (1), der passrecht zu dem genannten Sitz (2) ist und in diesen eingesetzt werden kann; und dadurch,
- dass der obere Teil eines solchen Behälters, im wesentlichen über dem Ansatz (1) am Boden mit einem tieferliegenden Profil (23) ausgebildet ist, das einen Sitz (31) für den Spülbecher aufweist, angeordnet in vertikaler Ausrichtung zu dem genannten Auslass (32), sowie eine Ablassöffnung (24) in dem genannten Sitz (31).

2. Vorrichtung nach Patentanspruch 1, **dadurch gekennzeichnet,** dass der direkte Ablass durch eine Ablassöffnung (7b) erfolgt, die auf der einen Seite des Behälters angeordnet ist und mit einer Schnellverbindung (8) für den Anschluss einer Leitung (25) zusammentrifft, die mit Absaugmitteln verbunden ist, die einen Teil der zahnärztlich Apparatur (4) bildet.

3. Vorrichtung nach Patentanspruch 1, enthaltend einen hohlen unteren Abschnitt (9), der den Ansatz (1) beinhaltet, einen hohlen oberen Abschnitt (10), der die Sitze (5) zur Aufnahme der zu sterilisierenden Instrumente (6) beinhalten, und einen mittleren Abschnitt (11), der im wesentlichen als Schale ausgebildet ist und als Auflagefläche dient, um die Tiefe zu bestimmen, mit welcher die Instrumente (6) eingesetzt werden können, **dadurch gekennzeichnet,** dass der untere Abschnitt (9) und der obere Abschnitt (10) mit ihren hohlen Innenseiten einander zugewandt angeordnet sind, der mittlere Abschnitt (11) in dem unteren Abschnitt (9) und der obere Abschnitt (10) über dem mittleren Abschnitt (11) befestigt ist; wobei Dichtungsmittel (12) zwischen dem oberen, mittleren und unteren Abschnitt (9, 10, 11) angeordnet sind, um eine stabile Befestigung zwischen dein mittleren Abschnitt (11) und dem unteren Abschnitt (9) zu gewährleisten.

4. Vorrichtung nach Patentanspruch 3, **dadurch gekennzeichnet,** dass der Boden des mittleren Abschnittes (11) mit einer Anzahl von im wesentlichen radial verlaufenden Kanälen (13) ausgelegt, von denen jeder an einem Punkt mündet, der mit einem entsprechenden Sitz (5) in dein hohlen oberen Abschnitt (10) zusammentrifft, und der dazu dient, die von den Instrumenten (6) ausgestossene Flüssigkeit abzuleiten.

5. Vorrichtung nach Patentanspruch 1, **dadurch gekennzeichnet,** dass die Ablassöffnung (24) in dem Sitz (31) für den Spülbecher zu dem entsprechenden Ablass (2a) ausgerichtet ist.

6. Vorrichtung nach Patentanspruch 1, **dadurch gekennzeichnet,** dass die Ablassöffnung (24) in dem Sitz (31) für den Spülbecher in vertikaler Ausrichtung zu dem Auslass (32) des Wasserhahns (19) angeordnet ist.

7. Vorrichtung nach Patentanspruch 1, **dadurch gekennzeichnet,** dass das tieferliegende Profil (23) im wesentliche die gesamte Fläche des oberen Teils des Behälters belegt, der nicht von dem Sitz (5) beansprucht wird.

8. Vorrichtung nach Patentanspruch 3, **dadurch gekennzeichnet,** dass der mittlere Abschnitt (11) eine auf einer Seite angeordnete öffnung (16) aufweist, die zur Aufnahme einer Schnellverbindung (8) zum Anschluss an Absaugmittel dient, welche einen Teil der zahnärztlichen Apparatur (4) bilden, und die vertikal zu einer entsprechenden öffnung (22) in dem hohlen unteren Abschnitt (9) ausgerichtet ist, durch die ein Durchlass für die Verbindung (8) gebildet wird.

9. Vorrichtung nach Patentanspruch 3, **dadurch gekennzeichnet,** dass der hohle untere Abschnitt (9) zwei weitere Ansätze (20) aufweist, einer auf jeder Seite des Bodenansatzes (1) angeordnet und dazu dienend, die Halterung (4a) der zahnärztlichen Apparatur (4) zu übergreifen, die den Sitz (2) zur Aufnahme eines Spülbechers (30) aufweist.

## Revendications

1. Dispositif pour le recueil et l'évacuation de liquides souillés qui s'écoulent des instruments de chirurgie dentaire lors de la stérilisation et pour la rétention de ces instruments pendant de telles operations, à utiliser dans un appareillage (4) comprenant un support (4a) prévoyant un logement (2) pourvu d'un respectif orifice de décharge (2a), destiné à contenir un verre à eau (30) pour le rinçage oral et un robinet (19) pourvu d'une buse (32) pour le remplissage du verre à eau (30), ce dispositif ayant la forme d'un récipient pourvu d'une pluralité de cavités (5) dans lesquelles disposer les instruments (6) qui doivent être stérilisés, situées à la partie supérieure et étant en communication avec au moins une ouverture inférieure (7) à travers laquelle le liquide stérilisant s'écoulant des instruments (6) est évacué directement sans qu'il s'accumule dans le récipient, caractérisé en ce qu'il comporte:
- une saillie inférieure (1) de forme conjuguée avec celle dudit logement (2) et insérable dans ce dernier et en ce que
- la partie supérieure de ce récipient, sensiblement au-dessus de la saillie inférieure (1) présente un décrochement (23) pourvu d'un logement (31) de réception dudit verre à eau (30) disposé en alignement vertical avec ladite buse (32), et un trou de sortie (24) situé dans ledit logement (31).

2. Dispositif selon la revendication 1, caractérisé en ce que l'évacuation directe se produit à travers une ouverture de sortie (7b) située sur un côté du récipient et coïncidant avec un manchon (8) pour l'attachement d'un tuyau (25) relié à des moyens d'aspirations constituant une partie de l'appareillage de chirurgie dentaire (4).

3. Dispositif selon la revendication 1, comprenant une portion inférieure creuse (9) incorporant la saillie (1), une portion supérieure creuse (10) incorporant les cavités (5) pour le logement des instruments (6) à stériliser, et une portion intermédiaire qui est matérialisée par une cuve et fait fonction d'arrêt servant à établir la profondeur à laquelle les instruments (6) peuvent être introduits, caractérisé en ce que la portion inférieure (9) et la portion supérieure (10) sont disposées de manière que leurs creux se trouvent en regard, la portion intermédiaire (11) étant insérée dans la portion inférieure (9) et la portions supérieure (10) étant adaptée sur la portion intermédiaire (11); des moyens assurant l'étanchéité (12) étant placés entre les portions supérieure, intermédiaire et inférieure (9, 10, 11) de manière à garantir un ajustage stable de la portion intermédiaire (11) dans la portion inférieure (9).

4. Dispositif selon la revendication 3, caractérisé en ce que la base de la portion intermédiaire (11) est pourvue d'une pluralité de canaux sensiblement radiaux (13), chacun se terminant à un endroit coïncidant avec une cavité respective (5) dans la portion creuse supérieure (10), servant à l'écoulement du liquide éjecté des instruments (6).

5. Dispositif selon la revendication 1, caractérisé en ce que le trou de sortie (24) dans le logement (31) de réception du verre à eau est aligné avec le respectif orifice de décharge (2a).

6. Dispositif selon la revendication 1, caractérisé en ce que le trou de sortie (24) dans le logement (31) de réception du verre à eau est situé en alignement vertical avec la buse (32) du robinet (19).

7. Dispositif selon la revendication 1, caractérisé en ce que ledit décrochement (23) occupe sensiblement toute la zone de la partie supérieure du récipient qui n'est pas occupée par les cavitées (5).

8. Dispositif selon la revendication 3, caractérisé en ce que la portion intermédiaire (11) présente un trou (16) situé sur un côté, servant à loger un manchon (8) pour la liaison à des moyens d'aspiration faisant partie de l'appareillage de chirurgie dentaire (4), et aligné verticalement avec une ouverture correspondante (22) dans la portion inférieure creuse (9) permettant le passage du manchon (8).

9. Dispositif selon la revendication 3, caractérisé en ce que la portion inférieure creuse (9) présente deux autres saillies (20) situées aux deux côtés de la saillie inférieure (1) et servant à entourer le support (4a) de l'appareillage de chirurgie dentaire (4) qui présente le logement (2) destiné à recevoir un verre à eau (30).
